# EUROPEAN PATENT APPLICATION

(11) **EP 4 730 473 A1**
(43) Date of publication of application: **22.04.2026**
(21) Application number: 24822400.8
(22) Date of filing: 22.04.2024
(51) Int. Cl.: H01M 10/0587

(54) **WINDING MECHANISM AND WINDING DEVICE**

(30) Priority: 15.06.2023 CN 202321536661 U
(71) Applicant: Wuxi Lead Intelligent Equipment Co., Ltd., Wuxi, Jiangsu 214028 (CN)
(72) Inventor: WANG, Fengjie, Wuxi, Jiangsu 214028 (CN); ZHAO, Liujie, Wuxi, Jiangsu 214028 (CN); ZHU, Aiwu, Wuxi, Jiangsu 214028 (CN)
(74) Representative: Rau, Schneck & Hübner Patentanwälte Rechtsanwälte PartGmbB
(86) International application number: PCT/CN2024/089147
(87) International publication number: WO 2024/255445

(57) **Abstract**

The present disclosure relates to the technical field of a winding device, and particularly to a winding mechanism and a winding device. The winding mechanism includes: a winding needle including a first half-needle and a second half-needle, the first half-needle and the second half-needle being oppositely provided spaced apart to form a gap; a cutting assembly including a cutting drive member, a pushing member, and a cutting blade, the pushing member and the cutting blade both being provided on the cutting drive member, the cutting drive member being configured to drive the pushing member and the cutting blade to move in a direction toward the winding needle, so as to cut a material strip by the cutting blade, and the pushing member being configured to push a free end of the cut material strip into the gap; and a fixing member configured to fix the free end pushed into the gap within the gap. The winding mechanism provided by the present disclosure can enable the winding device to process wound cells with relatively high efficiency. (FIG. 1)

## Description

### CROSS-REFERENCE TO RELATED APPLICATIONS

The present disclosure claims priority to a Chinese patent application No. 202321536661.7 filed with the CNIPA on June 15, 2023 and entitled "WINDING MECHANISM AND WINDING DEVICE", which is hereby incorporated by reference in its entirety.

### TECHNICAL FIELD

The present disclosure relates to the technical field of a winding device, and particularly to a winding mechanism and a winding device.

### BACKGROUND

A winding device is a device used for processing a wound cell of a battery. The winding device usually includes a winding needle, and the winding needle has an open gap. When processing the wound cell through the winding device, it is first necessary to complete the needle insertion action (passing the positive pole piece, negative pole piece, and the diaphragm through the opening into the gap of the winding needle), and then start winding to wind the cell.

In the related art, in order to complete the needle insertion action, before the needle insertion action, it is necessary to first ensure that the winding needle is retracted in the winding needle base. During the needle insertion action, it is required to make the winding needle extend out from the winding needle base, so that the positive pole piece, negative pole piece, and the diaphragm can just pass through the opening into the gap of the winding needle, and then winding can be started to wind the cell. However, this needle insertion method involves many auxiliary actions (such as the winding needle being retracted in the winding needle base and extending out from the winding needle base), resulting in low efficiency of the winding device in processing the wound cell.

### SUMMARY

The present disclosure discloses a winding mechanism and a winding device, which can enable the winding device to process wound cells with relatively high efficiency.

**In** order to achieve the above objective, in a first aspect, the present disclosure discloses a winding mechanism, including:
a winding needle including a first half-needle and a second half-needle, the first half-needle and the second half-needle being oppositely provided spaced apart to form a gap;
a cutting assembly including a cutting drive member, a pushing member, and a cutting blade, the pushing member and the cutting blade both being provided on the cutting drive member, the cutting drive member being configured to drive the pushing member and the cutting blade to move in a direction toward the winding needle, so as to cut a material strip by the cutting blade, and the pushing member being configured to push a free end of the cut material strip into the gap; and
a fixing member configured to fix the free end pushed into the gap within the gap.

During the needle insertion action, since both the pushing member and the cutting blade are provided on the cutting drive member, during the process where the cutting drive member drives the cutting blade to move in a direction toward the winding needle (the positive direction of an axis in the figure) to cut the material strip, it is possible to simultaneously cause the pushing member to move in the direction toward the winding needle, thereby enabling the pushing member to just push the free end of the cut material strip into the gap, thus achieving the needle insertion action.

Based on this, when the winding mechanism is applied in the scenario of processing a wound cell for a battery, the above material strip can be understood as the positive pole piece, negative pole piece, and diaphragm, etc., of the wound cell. Obviously, during the process where the cutting drive member drives the cutting blade to cut the positive pole piece, negative pole piece, and diaphragm, etc., it can simultaneously drive the pushing member to push the free ends of the cut-off positive pole piece, negative pole piece, and diaphragm, etc., into the gap, thereby achieving the needle insertion action for the wound cell. Compared to the method in the related art, before performing the needle insertion action, it is necessary to first ensure the winding needle is retracted in the winding needle base, and during the needle insertion action, the winding needle needs to extend out from the winding needle base to complete the needle insertion action, this winding mechanism does not require auxiliary actions (such as the winding needle being retracted in the winding needle base and extending out from the winding needle base). Therefore, when this winding mechanism is applied in a winding device, it is possible to improve the efficiency of the winding device in processing the wound cell to a certain extent, thereby enabling the winding device to process the wound cell with relatively high efficiency.

Optionally, the cutting assembly further includes:
a pushing drive member provided on the cutting drive member, the pushing member being provided on the pushing drive member, the cutting drive member being configured to drive the pushing drive member to move in a direction toward the winding needle, so as to cause the pushing member to move in a direction toward the winding needle, and the pushing drive member being configured to drive the pushing member to push the free end of the cut material strip into the gap.

Optionally, the pushing member is a pushing plate, the pushing plate has a pushing end for abutting against the material strip to push the free end into the gap, and the pushing end has a chamfer.

By making the pushing end of the pushing member used for abutting against the material strip have a chamfer, the pushing end can be made less sharp, thereby avoiding scratching the material strip.

Optionally, the fixing member is a clamping member, the clamping member has a clamping end, and the clamping end is configured to move in a direction toward or away from the first half-needle, so as to clamp or release the free end between the clamping end and the first half-needle.

By making the clamping end move in a direction toward the first half-needle, the free end can be clamped between the clamping end and the first half-needle after being pushed into the gap, thus avoiding the situation where the free end of the material strip pushed into the gap slips out of the gap again.

Optionally, the clamping member is an air cylinder, the clamping end is a free end of a piston rod of the air cylinder, there are provided a plurality of air cylinders, and the plurality of air cylinders are provided on the second half-needle spaced apart along an axial direction of the winding needle.

By making the number of the air cylinders be plural and making the plurality of air cylinders be provided on the second half-needle spaced apart along an axial direction of the winding needle, when the clamping ends of the plurality of air cylinders simultaneously move in a direction toward the first half-needle, the free ends of the piston rods of the plurality of air cylinders can simultaneously clamp the free end between the free ends of the plurality of piston rods and the first half-needle, thereby enabling the free end of the material strip to be more stably fixed within the gap, and thus better avoiding the situation where the free end of the material strip pushed into the gap slips out of the gap again.

Optionally, the pushing member is provided with a clearance opening, the clearance opening extends through the pushing member along a movement direction of the clamping end, for allowing the clamping end to pass through the clearance opening to clamp the free end between the clamping end and the first half-needle.

During the process where the clamping end moves in a direction toward the first half-needle to clamp the free end between the clamping end and the first half-needle, the clearance opening can allow the clamping end to pass through the pushing member, thereby avoiding interference between the pushing member and the clamping member.

Optionally, the first half-needle is provided with a suction hole, the suction hole being configured to hold the material strip pushed into the gap onto the first half-needle by suction.

By providing a suction hole on the first half-needle, and by making the pressure in the suction hole be negative pressure, it is possible to achieve, in a very simple way, the objective that the material strip pushed into the gap can be held onto the first half-needle by suction. Therefore, it is possible to simplify the structure of the entire winding mechanism to a certain extent.

Optionally, the winding mechanism further includes:
a tensioning assembly configured to tension the material strip before the cutting blade cuts the material strip.

By providing the tensioning assembly, since the tensioning assembly is capable of tensioning the material strip before the cutting blade cuts the material strip, the cutting blade can more conveniently cut the material strip, avoiding the situation where the material strip is loose during cutting, which would prevent the cutting blade from cutting off the material strip.

Optionally, the tensioning assembly includes:
a plurality of guiding rollers located on two sides of the cutting blade along a circumferential direction of the winding needle, wherein at least one guiding roller of the plurality of guiding rollers is configured to move in a direction toward the winding needle, so as to abut the material strip against an outer periphery of the winding needle to tension the material strip, wherein the at least one guiding rollers abutting against the outer periphery of the winding needle is located upstream of the cutting blade.

By making the plurality of guiding rollers respectively move in a direction toward the winding needle and abutting the material strip against the outer periphery of the winding needle, the winding needle and the plurality of guiding rollers can together form a plurality of clamping jaw-like structures, thereby achieving the purpose of fixing the material strip. That is, by simply making the plurality of guiding rollers respectively move in a direction toward the winding needle, the purpose of fixing the material strip respectively by the plurality of guiding rollers can be achieved without specially designing clamping jaws; therefore, the structural design is simple and clever. In addition, since the plurality of guiding rollers act together on the same winding needle, it is possible to make the entire winding mechanism relatively compact to a certain extent.

Optionally, each of the guiding rollers is connected to the cutting drive member, and the cutting drive member is configured to drive the cutting blade and each of the guiding rollers to synchronously move in a direction toward the winding needle, so as to tension the material strip by the guiding rollers before the cutting blade cuts the material strip.

By making each guiding roller be connected to the cutting drive member, it is possible for the tensioning assembly and the cutting blade to share the same cutting drive member, which can make the entire winding mechanism relatively compact while saving costs.

Optionally, the guiding rollers are unidirectional rotating rollers, rotation directions of the guiding rollers located on two sides of the cutting blade are opposite, and a tangential direction of rotation at a point where each of the guiding rollers abuts against the winding needle faces away from the cutting blade.

Optionally, each of the guiding rollers is elastically connected to the cutting drive member.

By making the guiding roller be elastically connected to the cutting drive member, when each guiding roller moves in a direction toward the winding needle to cause the material strip to be clamped between the guiding roller and the winding needle, the contact between the guiding roller and the outer periphery of the winding needle becomes an elastic contact, thereby avoiding the occurrence of violent collision between the guiding roller and the outer periphery of the winding needle.

Optionally, at least one of the first half-needle and the second half-needle is slidably provided along a direction toward or away from the other, so as to adjust a width of the gap.

By making at least one of the first half-needle and the second half-needle slidably provided along a direction toward or away from the other, it is possible to adjust the width of the gap very flexibly. On one hand, the width of the gap can be adjusted very flexibly according to the thickness of the material strip, allowing the gap to adapt to material strips of different thicknesses. On the other hand, when the winding mechanism is applied in a winding device to process a wound cell for a battery, after the wound cell is wound, by sliding at least one of the first half-needle and the second half-needle in a direction toward the other, the gap can be narrowed, thereby making the contact between the inner periphery of the wound cell and the outer periphery of the winding needle no longer tight, which facilitates the removal of the wound cell from the winding needle.

In a second aspect, the present disclosure discloses a winding device, which has a winding station and an unloading station, and the winding device includes:
an unwinding mechanism;
a turret, the turret being rotatably provided; and
the winding mechanism according to any one of the above first aspect, there are provided at least two winding needles, and the at least two winding needles being rotatably provided on the turret;
the cutting assembly is provided corresponding to the winding station, the unwinding mechanism is configured to convey a material strip to the winding needle located at the winding station, the cutting drive member is configured to drive the pushing member and the cutting blade to move in a direction toward the winding needle located at the winding station, so as to cut the material strip by the cutting blade, the pushing member is configured to push the free end of the cut material strip into the gap, the winding needle at the winding station is configured to wind, during its rotation, the material strip around a periphery of the winding needle, and the turret is configured to rotate, during its rotation, the winding needle located at the winding station to the unloading station, and rotate the winding needle located at the unloading station to the winding station.

Since the winding mechanism does not require auxiliary actions such as retracting the winding needle in the winding needle base and extending the winding needle from the winding needle base during the needle insertion action, when this winding mechanism is applied in a winding device, it is possible to improve the efficiency of the winding device in processing the wound cell to a certain extent, thereby enabling the winding device to process the wound cell with relatively high efficiency.

Compared with the prior art, the beneficial effects of the present disclosure are as follows:
In the present disclosure, during the needle insertion action, since both the pushing member and the cutting blade are provided on the cutting drive member, during the process where the cutting drive member drives the cutting blade to move in a direction toward the winding needle (the positive direction of an axis in the figure) to cut the material strip, it is possible to cause the pushing member to move in a direction toward the winding needle, thereby enabling the pushing member to push the free end of the cut material strip into the gap. Finally, the fixing member can be used to fix the free end pushed into the gap within the gap, so as to prevent the free end of the material strip pushed into the gap from slipping out of the gap again. At this point, the needle insertion action is achieved.

Based on this, when the winding mechanism is applied in the scenario of processing a wound cell for a battery, the above material strip can be understood as the positive pole piece, negative pole piece, and diaphragm, etc., of the wound cell. Obviously, during the process where the cutting drive member drives the cutting blade to cut the positive pole piece, negative pole piece, and diaphragm, etc., it can drive the pushing member to push the free ends of the cut-off positive pole piece, negative pole piece, and diaphragm, etc., into the gap, thereby achieving the needle insertion action for the wound cell. Compared to the method in the related art, before performing the needle insertion action, it is necessary to first ensure the winding needle is retracted in the winding needle base, and during the needle insertion action, the winding needle needs to extend out from the winding needle base to complete the needle insertion action, this winding mechanism does not require auxiliary actions (such as the winding needle being retracted in the winding needle base and extending out from the winding needle base). Therefore, when this winding mechanism is applied in a winding device, it is possible to improve the efficiency of the winding device in processing the wound cell to a certain extent, thereby enabling the winding device to process the wound cell with relatively high efficiency.

### BRIEF DESCRIPTION OF THE DRAWINGS

In order to more clearly illustrate embodiments of the present application, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a schematic structural diagram of a winding mechanism provided by an embodiment of the present disclosure (the free end is not pushed into the gap);
FIG. 2 is a schematic structural diagram of the winding mechanism in FIG. 1 in another state (the free end is pushed into the gap);
FIG. 3 is a positional relationship diagram between a second half-needle and a pushing member provided by an embodiment of the present disclosure;
FIG. 4 is a schematic structural diagram of another winding mechanism provided by an embodiment of the present disclosure (the free end is not pushed into the gap);
FIG. 5 is a schematic structural diagram of the winding mechanism in FIG. 4 in yet another state (the guiding roller abuts against the winding needle);
FIG. 6 is a schematic structural diagram of a winding device provided by an embodiment of the present disclosure.

Description of main reference numerals:
1 - winding needle; 11 - first half-needle; 12 - second half-needle; 121 - suction hole; 13 - gap;
2 - cutting assembly; 21 - cutting drive member; 22 - pushing member; 221 - pushing end; 222 - clearance opening; 2211 - chamfer; 23 - cutting blade; 24 - pushing drive member;
3 - fixing member; 31 - clamping end;
4 - tensioning assembly; 41 - guiding roller; 42 - spring;
10 - unwinding mechanism; 20 - turret; 30 - winding mechanism;
A - material strip; B - free end; W1 - winding station; W2 - unloading station; F - tangential direction of rotation.

### DETAILED DESCRIPTION

The following description will clearly and completely describe the technical solutions in the embodiments of the present disclosure in conjunction with the drawings in the embodiments of the present disclosure. Obviously, the described embodiments are only part of the embodiments of the present disclosure, not all of them. Based on the embodiments in the present disclosure, all other embodiments obtained by those skilled in the art without creative labor fall within the scope of protection of the present disclosure.

In the present disclosure, an orientation or positional relationship indicated by terms "up", "down", "left", "right", "front", "back", "top", "bottom", "inner", "outer", "vertical", "horizontal", "transverse", "longitudinal", etc., is based on the orientation or positional relationship shown in the accompanying drawings. These terms are mainly intended to better describe the present disclosure and its embodiments, rather than to limit that the indicated devices, components, or parts must have specific orientations or be constructed and operated in specific orientations.

Moreover, some of these terms may also be used to indicate other meanings besides indicating orientation or positional relationships. For example, the term "up" may also indicate a certain attachment relationship or connection relationship in certain cases. Those skilled in the art may understand the specific meanings of these terms in the present disclosure according to specific situations.

In addition, terms "installed", "disposed", "provided with", "connected", and "communicated" should be interpreted in a broad sense. For example, it can be a fixed connection, a detachable connection, or an integrated construction; it can be a mechanical connection or an electrical connection; it can be directly connected, or indirectly connected through an intermediate medium, and it can be an internal communication between two devices, elements or parts. For those of ordinary skill in the art, specific meanings of the above terms in the present disclosure can be understood according to specific situations.

In addition, terms such as "first", "second", etc., are mainly used to distinguish different devices, elements, or parts (which may be the same or different in specific types and structures), and do not imply or suggest relative importance and quantity of the indicated devices, elements, or parts. Unless otherwise stated, the term "multiple" means two or more.

The technical solutions of the present disclosure will be further described below in conjunction with specific embodiments and the accompanying drawings.

### Embodiment One

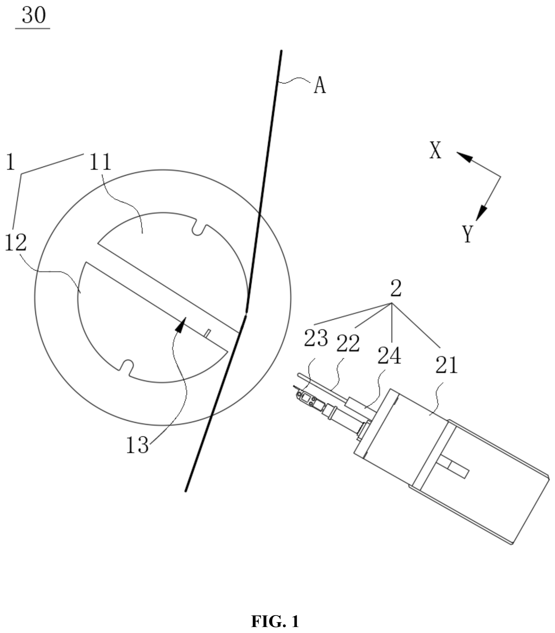

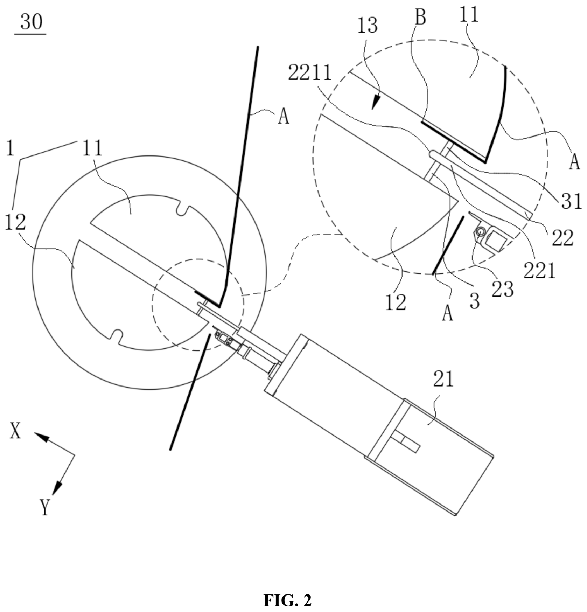

FIG. 1 is a schematic structural diagram of a winding mechanism provided by an embodiment of the present disclosure (the free end is not pushed into the gap). FIG. 2 is a schematic structural diagram of the winding mechanism in FIG. 1 in another state (the free end is pushed into the gap).

Referring to FIGS. 1 and 2, the winding mechanism includes a winding needle 1, a cutting assembly 2, and a fixing member 3. Here, the winding needle 1 includes a first half-needle 11 and a second half-needle 12. The first half-needle 11 and the second half-needle 12 are oppositely provided spaced apart to form a gap 13. The cutting assembly 2 includes a cutting drive member 21, a pushing member 22, and a cutting blade 23. The pushing member 22 and the cutting blade 23 are both provided on the cutting drive member 21. The cutting drive member 21 is configured to drive the pushing member 22 and the cutting blade 23 to move in a direction toward the winding needle 1 (the positive direction of the X-axis in FIG. 1), so as to cut the material strip A by the cutting blade 23. The pushing member 22 is configured to push the free end B of the cut material strip A into the gap 13. The fixing member 3 is configured to fix the free end B pushed into the gap 13 within the gap 13.

In the embodiment of the present disclosure, during the needle insertion action, since both the pushing member 22 and the cutting blade 23 are provided on the cutting drive member 21, during the process where the cutting drive member 21 drives the cutting blade 23 to move in a direction toward the winding needle 1 (the positive direction of the X-axis in the FIG. 1) to cut the material strip A, it is possible to cause the pushing member 22 to move in a direction toward the winding needle 1, thereby enabling the pushing member 22 to push the free end B of the cut material strip A into the gap 13. Finally, the fixing member 3 can be used to fix the free end B pushed into the gap 13 within the gap, so as to prevent the free end B of the material strip A pushed into the gap 13 from slipping out of the gap 13 again. At this point, the needle insertion action is achieved.

Based on this, when the winding mechanism is applied in the scenario of processing a wound cell for a battery, the above material strip can be understood as the positive pole piece, negative pole piece, and diaphragm, etc., of the wound cell. Obviously, during the process where the cutting drive member 21 drives the cutting blade 23 to cut the positive pole piece, negative pole piece, and diaphragm, etc., it can drive the pushing member 22 to push the free ends B of the cut-off positive pole piece, negative pole piece, and diaphragm, etc., into the gap 13, thereby achieving the needle insertion action for the wound cell. Compared to the method in the related art, before performing the needle insertion action, it is necessary to first ensure the winding needle is retracted in the winding needle base, and during the needle insertion action, the winding needle needs to extend out from the winding needle base to complete the needle insertion action, this winding mechanism does not require auxiliary actions (such as the winding needle being retracted in the winding needle base and extending out from the winding needle base). Therefore, when this winding mechanism is applied in a winding device, it is possible to improve the efficiency of the winding device in processing the wound cell to a certain extent, thereby enabling the winding device to process the wound cell with relatively high efficiency.

It is worth noting that the cutting off of the material strip A by the cutting blade 23 and the pushing of the free end B into the gap 13 by the pushing member 22 can be achieved by being driven by the same cutting drive member 21. Generally speaking, during the process where the cutting drive member 21 drives the pushing member 22 and the cutting blade 23 to move in the direction toward the winding needle 1, the material strip A is first cut by the cutting blade 23. As the cutting drive member 21 continues to drive the pushing member 22 and the cutting blade 23 toward the winding needle 1, the pushing member 22 achieves the purpose of pushing the free end B of the cut material strip A into the gap 13. When the cutting off of the material strip A by the cutting blade 23 and the pushing of the free end B into the gap 13 by the pushing member 22 are achieved by being driven by the same cutting drive member 21, since the same cutting drive member 21 can synchronously drive the cutting blade 23 and the pushing member 22 to move, on one hand, it is possible to further improve the efficiency of the winding device in processing the wound cell. On the other hand, since it is not necessary to provide independent drive members for the cutting blade 23 and the pushing member 22 respectively, it is possible to make the volume of the winding mechanism relatively compact while reducing the cost of the winding mechanism to a certain extent.

Of course, the cutting off of the material strip A by the cutting blade 23 and the pushing of the free end B into the gap 13 by the pushing member 22 can be achieved by being driven by different drive members. When achieved by being driven by different drive members, referring to FIGS. 1 and 2, in some embodiments, the cutting assembly 2 further includes: a pushing drive member 24. The pushing drive member 24 is provided on the cutting drive member 21. The pushing member 22 is provided on the pushing drive member 24. The cutting drive member 21 is configured to drive the pushing drive member 24 to move in a direction toward the winding needle 1, thereby causing the pushing member 22 to move in the direction toward the winding needle 1. The pushing drive member 24 is configured to drive the pushing member 22 to push the free end B of the cut material strip A into the gap 13.

With this arrangement, the function of cutting off the material strip A can be realized by the cutting drive member 21, and the function of pushing the free end B into the gap 13 can be realized by the pushing drive member 24. Each function corresponds to its own drive member, which are independent and more flexible.

It should be noted that understanding the above material strip as the positive pole piece, negative pole piece, and diaphragm, etc., of the wound cell is only one possible understanding when the winding mechanism is applied in the scenario of processing a wound cell for a battery, as shown in the embodiment of the present disclosure. Certainly, when the winding mechanism is applied in the scenario of processing a wound cell for a battery, the above material strip can also be understood as one or more of the positive pole piece, negative pole piece, and diaphragm, etc., which is not limited in the embodiments of the present disclosure.

Furthermore, when the application scenario changes, the above material strip can also be understood in other ways. For example, when the winding mechanism is applied in the scenario of winding a plastic strip, the above material strip can be understood as a plastic strip, etc. The embodiments of the present disclosure will not list all possibilities for the material strip.

The above cutting drive member 21 can be an air cylinder or any component capable of driving the pushing member 22 and the cutting blade 23 to synchronously move in the direction toward the winding needle 1. For example, the cutting drive member 21 can be an electric cylinder or a screw mechanism, etc. The embodiments of the present disclosure do not limit the cutting drive member 21. The above pushing drive member 24 can be similar to the cutting drive member 21, which will not be repeated herein in the embodiments of the present disclosure.

To prevent the pushing member 22 from scratching the material strip A during the process of pushing the free end B of the material strip A into the gap 13, in some embodiments, referring to FIG. 2, the pushing member 22 is a pushing plate. The pushing plate has a pushing end 221 for abutting against the material strip A to push the free end B into the gap 13. The pushing end 221 has a chamfer 2211.

By making the pushing end 221 of the pushing member 22, which is used for abutting against the material strip A, have a chamfer 2211, the pushing end 221 can be made less sharp, thereby avoiding scratching the material strip A.

The above chamfer 2211 can be a rounded chamfer or a straight chamfer, etc., which is not limited in the embodiments of the present disclosure.

In some embodiments, referring to FIG. 2, the fixing member 3 is a clamping member. The clamping member has a clamping end 31. The clamping end 31 is configured to move in a direction toward or away from the first half-needle 11 (the Y-axis direction in FIG. 2), so as to clamp or release the free end B between the clamping end 31 and the first half-needle 11.

By making the clamping end 31 move in a direction toward the first half-needle 11, the free end B can be clamped between the clamping end 31 and the first half-needle 11 after being pushed into the gap 13. In this way, it is possible to prevent the free end B of the material strip A pushed into the gap 13 from slipping out of the gap 13 again.

When the fixing member 3 is the clamping member, since the clamping end 31 of the clamping member can clamp or release the free end B between the clamping end 31 and the first half-needle 11, the first half-needle 11 is fully utilized as part of the structure for clamping the free end B. This implementation is clever and can make the volume of the fixing member 3 relatively compact to a certain extent.

Here, the above clamping member can be understood as an air cylinder. When the clamping member is understood as the air cylinder, the clamping end 31 can be understood as the free end of the piston rod of the air cylinder. Of course, the above clamping member can also be an electric cylinder, etc., which is not limited in the embodiments of the present disclosure.

In some embodiments, referring to FIG. 2, the above clamping member can be provided on the second half-needle 12. Certainly, the clamping member can also be provided at other positions, which is not limited in the embodiments of the present disclosure.

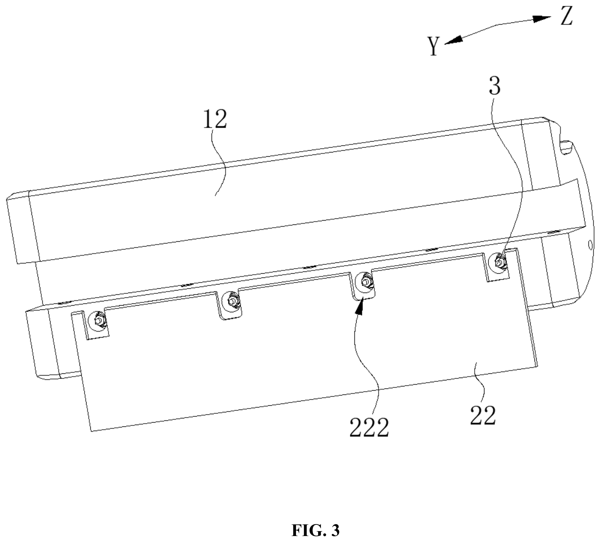

In some embodiments, referring to FIG. 3, there are provided a plurality of air cylinders. The plurality of clamping members are provided on the second half-needle 12 spaced apart along the axial direction of the winding needle 1 (the Z-axis direction in FIG. 3).

By making the number of the clamping members plural and making the plurality of clamping members be provided on the second half-needle 12 spaced apart along the axial direction of the winding needle 1, when the clamping ends 31 of the plurality of clamping members simultaneously move in a direction toward the first half-needle 11, the clamping ends 31 of the plurality of clamping members can simultaneously clamp the free end B between the plurality of clamping ends 31 and the first half-needle 11, thereby enabling the free end B to be more stably fixed within the gap 13, and thus better avoiding the situation where the free end B of the material strip A pushed into the gap 13 slips out of the gap 13 again.

Here, the number of the above clamping members can be four, five, etc. The embodiments of the present disclosure do not limit the number of clamping members. Of course, the number of clamping members can also be one, which is not limited in the embodiments of the present disclosure.

To avoid interference between the pushing member 22 and the clamping member, in some embodiments, referring to FIG. 3, the pushing member 22 is provided with a clearance opening 222. The clearance opening 222 extends through the pushing member 22 along the movement direction of the clamping end 31 (the Y-axis direction in FIG. 3), for allowing the clamping end 31 to pass through the clearance opening 222 to clamp the free end B between the clamping end 31 and the first half-needle 11.

With this arrangement, during the process where the clamping end 31 moves in a direction toward the first half-needle 11 to clamp the free end B between the clamping end 31 and the first half-needle 11, the clearance opening 222 can allow the clamping end 31 to pass through the pushing member 22, thereby avoiding interference between the pushing member 22 and the clamping member.

Here, referring to FIGS. 2 and 3, the shape of the above clearance opening 222 can be U-shaped. When the shape of the clearance opening 222 is U-shaped, it is possible for the clearance opening 222 to extend through the pushing end 221 of the pushing member 22 along the movement direction of the pushing member 22 (the X-axis direction in FIG. 2), thereby causing the clearance opening 222 to have an opening along the movement direction of the pushing member 22, which can better avoid interference between the pushing member 22 and the clamping member during the movement of the pushing member 22.

Of course, the clearance opening 222 can also have other possible shapes, for example, the clearance opening 222 can also be circular or triangular, etc., which is not limited in the embodiments of the present disclosure.

To better prevent the free end B of the material strip A pushed into the gap 13 from slipping out of the gap 13 again, in some embodiments, referring to FIG. 2, the first half-needle 11 is provided with a suction hole 121 (not shown in the figure). The suction hole 121 is configured to hold the material strip A pushed into the gap 13 onto the first half-needle 11 by suction.

By providing the suction hole 121 on the first half-needle 11, and by making the pressure in the suction hole 121 be negative pressure, it is possible to achieve the purpose of holding the material strip A pushed into the gap 13 onto the first half-needle 11 by suction in a very simple implementation method. Therefore, the structure of the entire winding mechanism can be simplified to a certain extent.

Here, the number of the above suction holes 121 can be plural, and the shape can be circular or any possible shape. The embodiments of the present disclosure do not limit the number and shape of the suction holes 121.

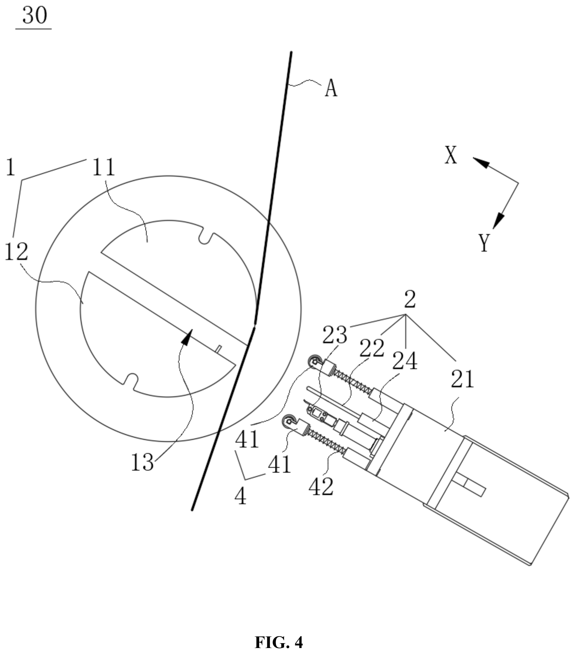

In some embodiments, referring to FIG. 4, the winding mechanism further includes: a tensioning assembly 4. The tensioning assembly 4 is configured to tension the material strip A before the cutting blade 23 cuts the material strip A.

By providing the tensioning assembly 4, since the tensioning assembly 4 is capable of tensioning the material strip A before the cutting blade 23 cuts the material strip A, the cutting blade 23 can more conveniently cut the material strip A, thereby avoiding the situation where the cutting blade 23 cannot cut the material strip A because the material strip A is loose during cutting the material strip A.

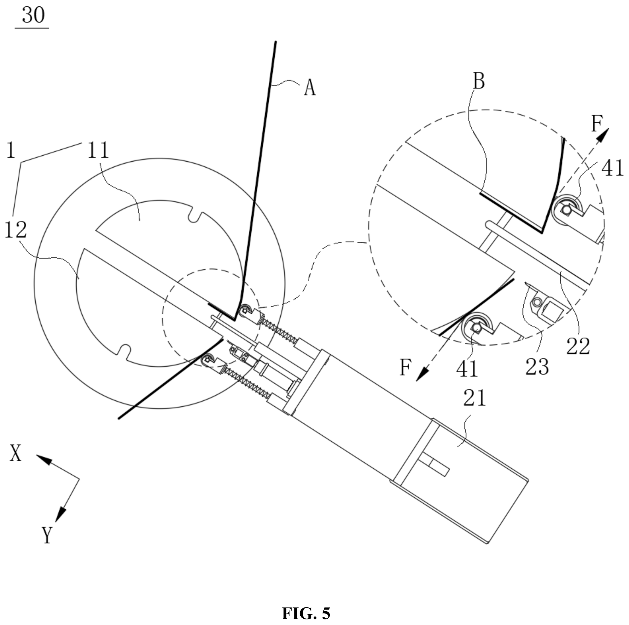

Here, the tensioning assembly 4 has various ways for achieving tensioning of the material strip A. In one possible implementation, referring to FIGS. 4 and 5, the tensioning assembly 4 includes: a plurality of guiding rollers 41. The plurality of guiding rollers 41 are located on two sides of the cutting blade 23 along a circumferential direction of the winding needle 1. At least one guiding roller 41 of the plurality of guiding rollers 41 is configured to move in a direction toward the winding needle 1 (the positive direction of the X-axis in FIG. 5), so as to abut the material strip A against the outer periphery of the winding needle 1 to tension the material strip A. The at least one guiding roller 41 abutting against the outer periphery of the winding needle 1 is located upstream of the cutting blade 23.

Since at least one guiding roller 41 of the plurality of guiding rollers 41, when moving in a direction toward the winding needle 1, can make the material strip A abut against the outer periphery of the winding needle 1, the material strip A is clamped between the guiding roller 41 and the winding needle 1, thereby serving to fix the material strip A. Furthermore, since the plurality of guiding rollers 41 are located on two sides of the cutting blade 23 along the circumferential direction of the winding needle 1, the material strip A can be fixed on both circumferential sides of the cutting blade 23 by the plurality of guiding rollers 41, thereby achieving the purpose of tensioning the material strip A.

By making the plurality of guiding rollers 41 respectively move in a direction toward the winding needle 1 and abutting the material strip A against the outer periphery of the winding needle 1, the winding needle 1 and the plurality of guiding rollers 41 can together form a plurality of clamping jaw-like structures, thereby achieving the purpose of fixing the material strip A. That is, by simply making the plurality of guiding rollers 41 respectively move in a direction toward the winding needle 1, the purpose of fixing the material strip A respectively by the plurality of guiding rollers 41 can be achieved without specially designing clamping jaws; therefore, the structural design is simple and clever. In addition, since the plurality of guiding rollers 41 act together on the same winding needle 1, it is possible to make the entire winding mechanism relatively compact to a certain extent.

The upstream of the cutting blade 23 refers to, when the winding mechanism is applied in the winding device and the winding device includes an unwinding mechanism 10 for conveying the material strip to the winding needle 1, the side of the cutting blade 23 close to the unwinding mechanism 10 is the upstream of the cutting blade 23.

Here, the number of the guiding rollers 41 can be two, three, etc., as long as the guiding rollers 41 are located on two sides of the cutting blade 23 along the circumferential direction of the winding needle 1. The embodiments of the present disclosure do not limit the number of the guiding rollers 41.

It should be noted that the above method of the guiding rollers 41 abutting the material strip A against the outer periphery of the winding needle 1 to tension the material strip A is only one possible way of tensioning the material strip A shown in the embodiments of the present disclosure. When the winding needle 1 is small, the winding needle 1 may not provide sufficient outer periphery for the guiding roller 41 to abut against. Therefore, an abutment plate can be specially provided in the movement trajectory of the guiding roller 41, and when the guiding roller 41 moves in a direction toward the winding needle 1, it is possible for the material strip A to abut against the abutment plate. In this way, it is also possible to achieve the purpose of tensioning the material strip A. The embodiments of the present disclosure do not limit the abutment position of the guiding roller 41.

The above tensioning assembly 4 can be implemented in various ways. In another possible implementation, the tensioning assembly 4 includes: a plurality of clamping jaws. The plurality of clamping jaws are located on two sides of the cutting blade 23 along the circumferential direction of the winding needle 1. Each clamping jaw is configured to clamp the material strip A. In this way, when the clamping jaws clamp the material strip A respectively on two sides of the cutting blade 23 along the circumferential direction of the winding needle 1, it is also possible to achieve the purpose of tensioning the material strip A. As long as the purpose of tensioning the material strip A can be achieved, the embodiments of the present disclosure do not limit the specific implementation of the tensioning assembly 4.

In some embodiments, referring to FIG. 5, each guiding roller 41 is connected to the cutting drive member 21. The cutting drive member 21 is configured to drive the cutting blade 23 and the guiding rollers 41 to synchronously move in a direction toward the winding needle 1, so as to tension the material strip A by the guiding rollers 41 before the cutting blade 23 cuts the material strip A.

By making each guiding roller 41 be connected to the cutting drive member 21, the tensioning assembly 4 and the cutting blade 23 can share the same cutting drive member 21, which can save costs while making the entire winding mechanism relatively compact.

Furthermore, since when the cutting drive member 21 drives the cutting blade 23 and the guiding rollers 41 to synchronously move in a direction toward the winding needle 1, it can achieve both cutting the material strip A by the cutting blade 23 and tensioning the material strip A by the guiding rollers 41 such that the work of tensioning the material strip A and the work of cutting off the material strip A proceed simultaneously, the processing efficiency of the winding mechanism can be further improved. Based on this, when the winding mechanism is applied in the winding device, it is possible to further improve the efficiency of the winding device in processing the wound cell.

To prevent the situation where the material strip A becomes loose to affect the ability of the cutting blade 23 to cut the material strip A properly since the guiding roller 41 rolls during the process of cutting off the material strip A by the cutting blade 23, in some embodiments, the guiding roller 41 is a unidirectional rotating roller. The rotation directions of the guiding rollers 41 located on two sides of the cutting blade 23 are opposite, and a tangential direction F of rotation at a point where each guiding roller 41 abuts against the winding needle 1 faces away from the cutting blade 23.

By making the tangential direction F of rotation at the point where each guiding roller 41 abuts against the winding needle 1 face away from the cutting blade 23, it can be ensured that during the process where the cutting blade 23 cuts the material strip A, the guiding rollers 41 can block the material strip A from sliding in the direction toward the cutting blade 23, such that the material strip A is always in a tensioned state, which facilitates cutting off the material strip A by the cutting blade 23.

In some embodiments, referring to FIG. 4, each guiding roller 41 is elastically connected to the cutting drive member 21. By making the guiding roller 41 elastically connected to the cutting drive member 21, when each guiding roller 41 moves in a direction toward the winding needle 1 such that the material strip A is clamped between the guiding roller 41 and the winding needle 1, the contact between the guiding roller 41 and the periphery of the winding needle 1 becomes an elastic contact, thereby avoiding the occurrence of violent collision between the guiding roller 41 and the outer periphery of the winding needle 1.

Specifically, referring to FIG. 4, the guiding roller 41 can be elastically connected to the cutting drive member 21 via a spring 42, or elastically connected to the cutting drive member 21 via other possible elastic elements, which is not limited in the embodiments of the present disclosure.

In some embodiments, at least one of the first half-needle 11 and the second half-needle 12 is slidably provided along a direction toward or away from the other, so as to adjust a width of the gap 13.

By making at least one of the first half-needle 11 and the second half-needle 12 slidably provided along a direction toward or away from the other, it is possible to adjust the width of the gap 13 very flexibly. On one hand, the width of the gap 13 can be adjusted very flexibly according to the thickness of the material strip A, allowing the gap 13 to adapt to material strips A of different thicknesses. On the other hand, when the winding mechanism is applied in a winding device to process a wound cell for a battery, after the wound cell is wound, by sliding at least one of the first half-needle 11 and the second half-needle 12 in a direction toward the other, the gap 13 can be narrowed, thereby making the contact between the inner periphery of the wound cell and the outer periphery of the winding needle no longer tight, which facilitates the removal of the wound cell from the winding needle.

### Embodiment Two

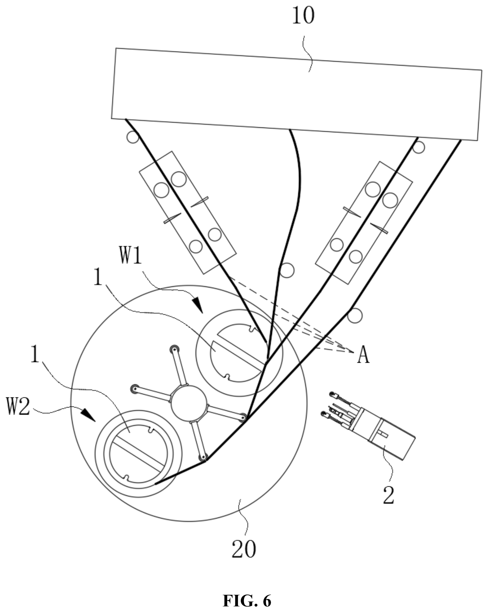

FIG. 6 is a schematic structural diagram of a winding device provided by an embodiment of the present disclosure.

Referring to FIGS. 2 and 6, the winding device has a winding station W1 and an unloading station W2. The winding device includes: an unwinding mechanism 10, a turret 20, and a winding mechanism 30. Here, the turret 20 is rotatably provided. There are provided at least two winding needles 1, and the plurality of winding needles 1 are rotatably provided on the turret 20. The cutting assembly 2 is provided corresponding to the winding station W1. The unwinding mechanism 10 is configured to convey a material strip A to the winding needle 1 located at the winding station W1. The cutting drive member 21 is configured to drive the pushing member 22 and the cutting blade 23 to move in a direction toward the winding needle 1 located at the winding station W1, so as to cut the material strip A by the cutting blade 23. The pushing member 22 is configured to push the free end B of the cut material strip A into the gap 13. The winding needle 1 at the winding station W1 is configured to wind, during its rotation, the material strip A around the outer periphery of the winding needle 1. The turret 20 is configured to rotate, during its rotation, the winding needle 1 located at the winding station W1 to the unloading station W2, and rotate the winding needle 1 located at the unloading station W2 to the winding station W1.

Here, the structure of the winding mechanism 30 can be the same as that of any winding mechanism 30 described in the above embodiment one, and can bring the same or similar beneficial effects. For details, refer to the description of the winding mechanism 30 in the above embodiment one, which is not limited in the embodiments of the present disclosure.

In the embodiment of the present disclosure, when the winding device processes a wound cell for a battery, first, the unwinding mechanism 10 can convey the material strip A to the winding needle 1 located at the winding station W1. Then, the cutting drive member 21 can drive the pushing member 22 and the cutting blade 23 to move in a direction toward the winding needle 1 located at the winding station W1, so as to cut the material strip A by the cutting blade 23 and push the free end B of the cut material strip A into the gap 13 by the pushing member 22. After the free end B of the material strip A is pushed into the gap 13, the fixing member 3 can fix the free end B pushed into the gap 13 within the gap 13, to prevent the free end B of the material strip A pushed into the gap 13 from slipping out of the gap 13 again. Then, since the winding needle 1 is rotatably provided on the turret 20, when the winding needle 1 rotates relative to the turret 20, the material strip A can be gradually wound around the outer periphery of the winding needle 1 located at the winding station W1.

After the winding amount of the material strip A reaches a preset amount, since the turret 20 is rotatably provided, the turret 20 can be rotated, thereby rotating the winding needle 1 located at the winding station W1 to the unloading station W2, and rotating the winding needle 1 located at the unloading station W2 to the winding station W1. After the winding needle 1 located at the winding station W1 is rotated to the unloading station W2, the wound cell on this winding needle 1 can be removed from the winding needle 1 for unloading. After the winding needle 1 located at the unloading station W2 is rotated to the winding station W1, the unwinding mechanism 10 can convey the material strip A to this winding needle 1. The cutting drive member 21 can drive the pushing member 22 and the cutting blade 23 to synchronously move in a direction toward the winding needle 1 located at the winding station W1, so as to cut the material strip A by the cutting blade 23 and push the free end B of the cut material strip A into the gap 13 by the pushing member 22, enabling this winding needle 1 to wind the wound cell. All the above actions are performed cyclically.

Since the winding mechanism 30 does not require auxiliary actions (such as the winding needle being retracted in the winding needle base and extending out from the winding needle base) during the needle insertion action, when this winding mechanism is applied in the winding device, it is possible to improve the efficiency of the winding device in processing the wound cell to a certain extent, and thus enable the winding device to process the wound cell with relatively high efficiency.

Finally, it should be noted that the above embodiments are only used to illustrate the technical solutions of the present disclosure, not to limit them; although the present disclosure has been described in detail with reference to the foregoing embodiments, a person of ordinary skill in the art should understand that it is still possible to make modifications to the technical solutions documented in the foregoing embodiments, or to make equivalent substitutions for some or all of the technical features therein; and these modifications or substitutions do not take the essence of the corresponding technical solutions out of the scope of the technical solutions of the embodiments of the present disclosure.

## Claims

1. A winding mechanism, **characterized in that** the winding mechanism comprises:
a winding needle (1) comprising a first half-needle (11) and a second half-needle (12), the first half-needle (11) and the second half-needle (12) being oppositely provided spaced apart to form a gap (13);
a cutting assembly (2) comprising a cutting drive member (21), a pushing member (22), and a cutting blade (23), the pushing member (22) and the cutting blade (23) both being provided on the cutting drive member (21), the cutting drive member (21) being configured to drive the pushing member (22) and the cutting blade (23) to move in a direction toward the winding needle (1), so as to cut a material strip (A) by the cutting blade (23), and the pushing member (22) being configured to push a free end (B) of the cut material strip (A) into the gap (13); and
a fixing member (3) configured to fix the free end (B) pushed into the gap (13) within the gap (13).

2. The winding mechanism according to claim 1, **characterized in that** the cutting assembly (2) further comprises:
a pushing drive member (24) provided on the cutting drive member (21), the pushing member (22) being provided on the pushing drive member (24), the cutting drive member (21) being configured to drive the pushing drive member (24) to move in a direction toward the winding needle (1), thereby causing the pushing member (22) to move in a direction toward the winding needle (1), and the pushing drive member (24) being configured to drive the pushing member (22) to push the free end (B) of the cut material strip (A) into the gap (13).

3. The winding mechanism according to claim 1, **characterized in that** the pushing member (22) is a pushing plate, the pushing plate has a pushing end (221) for abutting against the material strip (A) to push the free end (B) into the gap (13), and the pushing end (221) has a chamfer (2211).

4. The winding mechanism according to claim 1, **characterized in that** the fixing member (3) is a clamping member, the clamping member has a clamping end (31), and the clamping end (31) is configured to move in a direction toward or away from the first half-needle (11), so as to clamp or release the free end (B) between the clamping end (31) and the first half-needle (11).

5. The winding mechanism according to claim 4, **characterized in that** the clamping member is an air cylinder, the clamping end (31) is a free end of a piston rod of the air cylinder, there are provided a plurality of air cylinders, and the plurality of air cylinders are provided on the second half-needle (12) spaced apart along an axial direction of the winding needle (1).

6. The winding mechanism according to claim 4, **characterized in that** the pushing member (22) is provided with a clearance opening (222), the clearance opening (222) extends through the pushing member (22) along a movement direction of the clamping end (31), for allowing the clamping end (31) to pass through the clearance opening (222) to clamp the free end (B) between the clamping end (31) and the first half-needle (11).

7. The winding mechanism according to any one of claims 1 to 6, **characterized in that** the first half-needle (11) is provided with a suction hole (121), the suction hole (121) being configured to hold the material strip (A) pushed into the gap (13) onto the first half-needle (11) by suction.

8. The winding mechanism according to any one of claims 1 to 6, **characterized in that** the winding mechanism further comprises:
a tensioning assembly (4) configured to tension the material strip (A) before the cutting blade (23) cuts the material strip (A).

9. The winding mechanism according to claim 8, **characterized in that** the tensioning assembly (4) comprises:
a plurality of guiding rollers (41) located on two sides of the cutting blade (23) along a circumferential direction of the winding needle (1), wherein at least one guiding roller (41) of the plurality of guiding rollers (41) is configured to move in a direction toward the winding needle (1), so as to abut the material strip (A) against an outer periphery of the winding needle (1) to tension the material strip (A), wherein the at least one guiding roller (41) abutting against the outer periphery of the winding needle (1) is located upstream of the cutting blade (23).

10. The winding mechanism according to claim 9, **characterized in that** each of the guiding rollers (41) is connected to the cutting drive member (21), and the cutting drive member (21) is configured to drive the cutting blade (23) and each of the guiding rollers (41) to synchronously move in a direction toward the winding needle (1), so as to tension the material strip (A) by the guiding rollers (41) before the cutting blade (23) cuts the material strip (A).

11. The winding mechanism according to claim 9, **characterized in that** the guiding rollers (41) are unidirectional rotating rollers, rotation directions of the guiding rollers (41) located on two sides of the cutting blade (23) are opposite, and a tangential direction (F) of rotation at a point where each of the guiding rollers (41) abuts against the winding needle (1) faces away from the cutting blade (23).

12. The winding mechanism according to claim 9, **characterized in that** each of the guiding rollers (41) is elastically connected to the cutting drive member (21).

13. The winding mechanism according to any one of claims 1 to 6, **characterized in that** at least one of the first half-needle (11) and the second half-needle (12) is slidably provided along a direction toward or away from the other, so as to adjust a width of the gap (13).

14. A winding device, **characterized in that** the winding device has a winding station (W1) and an unloading station (W2), and the winding device comprises:
an unwinding mechanism (10);
a turret (20), the turret (20) being rotatably provided; and
the winding mechanism (30) according to any one of claims 1 to 13, there are provided at least two winding needles (1), and the at least two winding needles (1) being rotatably provided on the turret (20);
wherein the cutting assembly (2) is provided corresponding to the winding station (W1), the unwinding mechanism (10) is configured to convey a material strip (A) to the winding needle (1) located at the winding station (W1), the cutting drive member (21) is configured to drive the pushing member (22) and the cutting blade (23) to move in a direction toward the winding needle (1) located at the winding station (W1), so as to cut the material strip (A) by the cutting blade (23), the pushing member (22) is configured to push the free end (B) of the cut material strip (A) into the gap (13), the winding needle (1) at the winding station (W1) is configured to wind, during its rotation, the material strip (A) around an outer periphery of the winding needle (1), and the turret (20) is configured to rotate, during its rotation, the winding needle (1) located at the winding station (W1) to the unloading station (W2), and rotate the winding needle (1) located at the unloading station (W2) to the winding station (W1).
